Europäisches Patentamt

European Patent Office

Office européen des brevets

(19)

(11) Publication number : **0 335 430 B1**

(12) # EUROPEAN PATENT SPECIFICATION

(45) Date of publication of patent specification :
**11.11.92 Bulletin 92/46**

(21) Application number : **89200450.8**

(22) Date of filing : **22.02.89**

(51) Int. Cl.⁵ : **H02G 15/00,** H02G 15/10, H01B 3/46

(54) **Method for protecting elements enclosed by a housing against the influence of moisture.**

(30) Priority : **31.03.88 NL 8800832**

(43) Date of publication of application :
**04.10.89 Bulletin 89/40**

(45) Publication of the grant of the patent :
**11.11.92 Bulletin 92/46**

(84) Designated Contracting States :
**AT BE CH DE ES FR GB GR IT LI LU NL SE**

(56) References cited :
**EP-A- 0 120 115
EP-A- 0 197 606
EP-A- 0 246 855
DE-A- 2 900 162**

(73) Proprietor : **Lovink-Terborg B.V.
Lovinkweg, 3
NL-7061 DT Terborg (NL)**

(72) Inventor : **Van den Hout, Jan Simon
Eksterhof 3
NL-7051 WP Varsseveld (NL)**
Inventor : **Kaptein, Bartholomeus Johannes
Ph.P. Cappettilaan 20
NL-7071 CS Ulft (NL)**

(74) Representative : **Schumann, Bernard Herman
Johan et al
OCTROOIBUREAU ARNOLD & SIEDSMA
Sweelinckplein 1
NL-2517 GK The Hague (NL)**

EP 0 335 430 B1

## Description

The invention relates to a method for protecting elements enclosed substantially immovably in a housing against the influences of moisture, for example parts intended for electrical purposes such as the ends of and coupling means for cables and other electrical and electronic components which are enclosed by a cable socket coupling, said method comprising the following steps:

(1) the provision of the housing;

(2) the arrangement in that housing of the elements;

(3) the optional closure of the housing;

(4) the leaving free of an access opening to the space enclosed by the housing;

(5) the filling of the housing via the access opening with a liquid filling mass that may be viscous; and

(6) the closure of the access opening.

Such a method is known from EP-A-0 197 606, but in this case the liquid filling mass is a plastics which cures.

As an example, reference is first made to the use of a cable socket coupling serving for the coupling of two cables. The cable socket coupling consists of two parts. After the relevant core or cores have been joined to each other the connection is enclosed by placing the two socket coupling halves around the connection and closing them. One of both socket coupling halves displays an access opening. An insulating oil is poured into this access opening.

Further known is the use of a sealing at the location of the passage openings for the cables. Such a sealing is known for example in the form of a cured XLPE insulation ring which is adhered to the cable sheath.

The invention now proposes to change the method referred to in the preamble with the following step:

the selection for performing of the step (5) of a filling mass which hardens on contact with water. Such a filling mass can for example be a silicon-containing mass.

Underlying the invention is the insight that it is advantageous under normal, undisturbed conditions to keep a cable socket coupling for example filled with a liquid. A liquid has the advantage that it displays no shrinkage cavities while moreover air bubbles which may be present in the liquid rise and can accumulate in a harmless position. This latter is in contrast to a solid material such as a cured plastic in which cavities such as air bubbles can be found which could have the undesired effect in an electrical field of causing very high field intensities, break-through, burning of material etc., which can lead to situations difficult to control.

The advantage of the invention is further that use can be made of normal housings available on the market such as switch boxes, cable socket couplings, transformers and the like, which are already provided with an access opening to be filled with a mineral insulating oil.

Should for example mechanical damage to the housing, for example the cable socket coupling, cause a leakage, for example a hairline crack, water coming from outside will be able to enter the interior of the housing. The water comes into contact with the filling mass, which reacts with the water by hardening. The forming of film occurs, which gradually continues as the amount of water entering increases. The film formation does not extend further when the entry of water stops.

When employed together with cable socket couplings the method according to the invention gives an excellent sealing between the socket coupling halves and the cables. This relates on the one hand to the mechanical attachment at the access openings for the cables, which are in any case in direct contact with the outside environment so that a certain film formation always occurs at those locations. Through the choice of a filling mass with good electrical insulating properties, very good electrical properties can also be ensured in the interior of the socket coupling. It is further noted that when using oil according to the known art the oil has a tendency to penetrate into the cable which is an uncontrolled process unless special sealing steps are taken. When using a filling mass as according to the invention the liquid mass likewise penetrates into the cable ends but hardens there because of the moisture that is present.

The method according to the invention can be performed very simply and relatively rapidly.

The use of a silicon containing filling mass such as a silicon rubber has the advantage that in the fully hardened mass there is also no occurrence of shrinkage cavities, since the hardened mass is very soft and flexible. This has the further advantage that also after hardening some distortion of the housing by mechanical or thermal influences is permissible.

It has also been observed in the case of a silicon containing filling mass that the relative dielectric constants in solid state and in liquid state deviate little from each other. For a determined mass $\varepsilon_r$ of 3.54 has been measured in the liquid state at 50 Hz, while for the same material in the hardened state under the same measuring conditions 3.34 has been recorded. The important consequence of this is that for electrical applications it makes little or no difference whether the mass is still in the liquid state or has already hardened.

The invention will now be elucidated with reference to the annexed drawing. In the drawing:

Figure 1 shows a partly broken away top view of a cable socket coupling; and

Figure 2 is a vertical lengthwise section of the cable socket coupling as in figure 1.

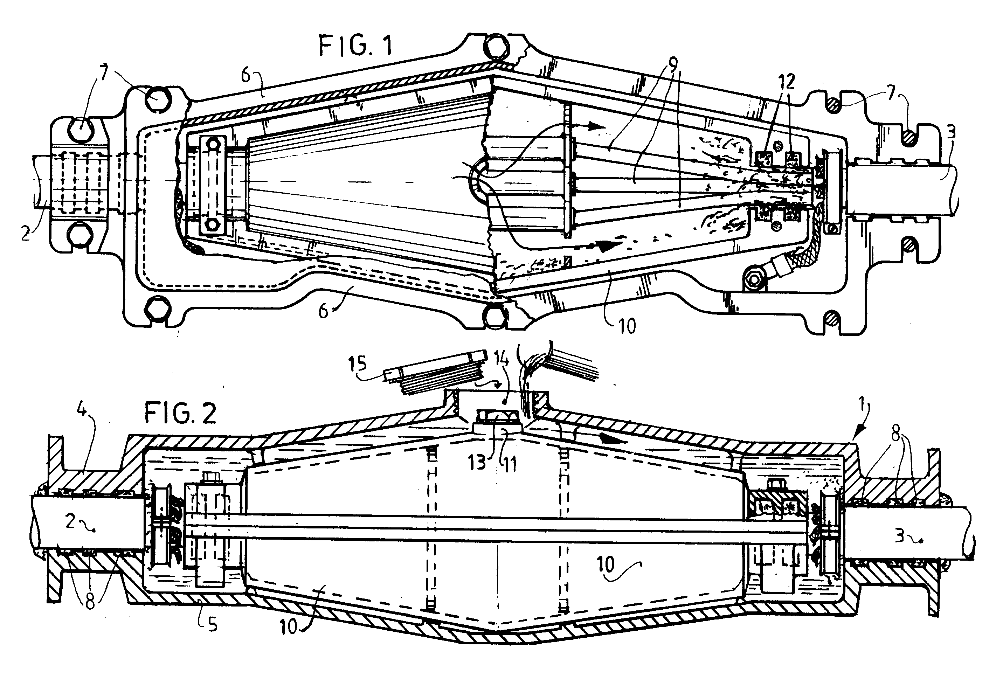

Figure 1 shows a cable socket coupling 1 serving to connect two three-core cables 2, 3 to one another.

As is apparent from figure 2, the cable socket coupling consists of two parts 4, 5 which are connected to one another in the manner shown in figure 1 by flange edges 6 by means of screw connections 7. The cables 2, 3 are coupled sealingly to the cable socket coupling 1 by means of seals 8. The core ends, all of which are designated with 9 for the sake of convenience, are enclosed by an inner socket coupling 10 which comprises a closable access opening 11. This inner socket coupling 10 also comprises seals, which are indicated with 12. After assembling the inner socket coupling 10 around the core ends 9, which are joined to each other in ways not to be described further, a liquid silicon mass is poured into the inner socket coupling via the access opening 11. The access opening is then closed off by a screw cap 13. The cable socket coupling parts 4, 5 are then placed around the inner socket coupling 10 in the manner described. This socket coupling 1 also is poured full of silicon mass via an access opening designated with 14 whereupon the access opening 14 is closed by means of a screw cap 15.

It will be apparent that the invention is not restricted to application in a cable socket coupling. Circuit breakers, transformers, socket couplings for information cables etc. can also be protected in the manner of the invention against the influences of moisture.

## Claims

1. Method for protecting elements enclosed substantially immovably in a housing (10) against the influences of moisture, for example elements (9) intended for electrical purposes such as the ends of and coupling means for cables (1,2) and other electrical and electronic components, said housing (10) being enclosed by a cable socket coupling (4,5), said method comprising the following steps:
   (1) the provision of the housing (10);
   (2) the arrangement in that housing of the elements (9);
   (3) the optional closure (12) of said housing;
   (4) the leaving free of an access opening (11) to the space enclosed by said housing;
   (5) the filling of said housing via said access opening (11) with a liquid filling mass which may be viscous; and
   (6) the closure (13) of said access opening, **characterised by** the following step:
   (7) the selection for performing of step (5) of a filling mass which hardens through contact with water.

2. Method as claimed in claim 1, **characterised by** the following step:
   (8) the selection of a silicon containing filling mass for the performing of step (7).

## Patentansprüche

1. Verfahren zum Schützen von im wesentlichen unbeweglichen, in einem Gehäuse (10) eingeschlossenen Elementen gegen die Einwirkungen von Feuchtigkeit z.B. Elemente (9) die für elektrische Zwectie bestimmt sind, wie beispielsweise die Enden von und Kupplungsmitteln für Kabel (1, 2) und andere elektrische und elektronische Bauteile, wobei das Gehäuse (10) von einer Kabelschuhkupplung (4, 5) umgeben ist und das Verfahren folgende Schritte umfaßt:
   1. Vorsehen des Gehäuses (10);
   2. Anordnen der Elemente (9) in dem Gehäuse;
   3. Gegebenenfalls Schließen (12) des Gehäuses;
   4. Freilassen einer Zugangsöffnung (11) zu dem vom Gehäuse eingeschlossenen Raum;
   5. Füllen des Gehäuses durch die Zugangsöffnung (11) mit einer flüssigen Füllmasse, die viskos sein kann; und
   6. Verschließen (13) der Zugangsöffnung, **gekennzeichnet** durch den folgenden Schritt:
   7. Wahl einer Füllmasse, die durch Kontakt mit Wasser erhärtet, zum Durchführen des Schrittes 5.

2. Verfahren nach Anspruch 1, **gekennzeichnet** durch den Schritt:
   8. Wahl einer silikonhaltigen Füllmasse zum Durchführen des Schrittes 7.

## Revendications

1. Procédé de protection d'éléments enfermés de manière sensiblement inamovible dans un boîtier (10) contre l'influence de l'humidité, par exemple d'éléments (9) destinés à des utilisations dans l'électricité tels que les extrémités et les moyens de connexion de câbles (1,2) et d'autres composants électriques et électroniques, ledit boîtier (10) étant enfermé dans un accouplement de bornes de câble (4,5), ledit procédé comportant les étapes suivantes :
   (1) la fermeture du boîtier (10);
   (2) la disposition dans ce boîtier des éléments (9) ;
   (3) la fermeture (12) éventuelle dudit boîtier ;
   (4) le maintien d'une ouverture d'accès (11) vers l'espace enfermé dans ledit boîtier ;
   (5) le remplissage dudit boîtier à travers ladite ouverture d'accès (11) avec une masse de remplissage liquide qui peut être visqueuse ; et

(6) la fermeture (13) de ladite ouverture d'accès, caractérisé en ce qu'il comporte l'étape suivante :

(7) la sélection pour exécuter l'étape (5) d'une masse de remplissage qui durcit au contact de l'eau.

2. Procédé selon la revendication 1, caractérisé en ce qu'il comporte l'étape suivante :

(8) la sélection d'une masse de remplissage contenant du silicone pour l'exécution de l'étape (7).

EP 0 335 430 B1

FIG.1

FIG.2

5